# EUROPÄISCHE PATENTSCHRIFT

(11) **EP 1 719 705 B1**
(45) Veröffentlichungstag und Bekanntmachung des Hinweises auf die Patenterteilung: **13.06.2007**
(21) Anmeldenummer: 05008508.3
(22) Anmeldetag: 19.04.2005
(51) Int. Cl.: B65B 9/20, B65B 51/20, B65B 51/32, B65B 57/00, B29C 65/10

(54) **Schlauchbeutelmaschine**
Form, fill and seal machine for tubular bags
Machine de formation, remplissage et scellage de sacs tubulaires

(43) Veröffentlichungstag der Anmeldung: 08.11.2006
(73) Patentinhaber: TEEPACK SPEZIALMASCHINEN GMBH & CO. KG, D-40667 Meerbusch (DE)
(72) Erfinder: Vits, Dieter, 41470 Neuss (DE); Hauers, Manfred, 41749 Viersen (DE); Lambertz, Stefan, Dr., 50354 Hürth (DE)
(74) Vertreter: Grünecker, Kinkeldey, Stockmair & Schwanhäusser Anwaltssozietät

(56) Entgegenhaltungen:
- EP-A- 0 346 053
- EP-A- 0 614 809
- EP-A- 0 974 519
- DE-A1- 2 630 460
- US-A- 4 109 792
- US-A- 4 578 931
- PATENT ABSTRACTS OF JAPAN Bd. 017, Nr. 268 (M-1416), 25. Mai 1993 (1993-05-25) -& JP 05 004609 A (MASAO FUKUDA), 14. Januar 1993 (1993-01-14)

## Beschreibung

Die vorliegende Erfindung betrifft eine Schlauchbeutelmaschine mit den oberbegrifflichen Merkmalen von Anspruch 1. Die vorliegende Erfindung betrifft insbesondere eine Schlauchbeutelmaschine zum Formen, Füllen und Verschließen von Schlauchbeuteln, die aus einem als ebene Bahn zugeführten Hüllstoff gebildet werden. Solche Vorrichtungen werden auch als Form-Fill-Seal-Vorrichtungen beschrieben und es sind vertikale und horizontale Schlauchbeutelmaschinen bekannt. Bei den vertikalen Schlauchbeutelmaschinen erfolgt die Befüllung der Schlauchbeutel regelmäßig über ein Füllrohr, in welches das zu verpackende Gut, regelmäßig ein Schüttgut, in zyklischen Abständen abgeworfen wird.

Schlauchbeutelmaschinen der gattungsgemäßen Art, wie sie beispielsweise aus der DE 33 45 459 bekannt sind, weisen ein Zuführsystem für den den Schlauch bildenden Hüllstoff auf. Dieser Hüllstoff wird regelmäßig über einen Kragen umgelenkt, so dass der Hüllstoff im wesentlichen schlauchförmig um das Füllrohr geführt wird, welches in der Regel einen rechteckigen oder runden Querschnitt hat. Das Zuführsystem weist normalerweise eine Vorspanneinrichtung auf, die sicherstellt, dass der Hüllstoff unter einer gewissen Vorspannung und faltenfrei zu dem Kragen geführt wird.

An einer Seite des Füllrohres befindet sich üblicherweise eine Längsschweißeinrichtung. An gegenüberliegenden anderen Seiten des Füllrohres befindet sich eine Abzugseinheit zum Fördern des Hüllstoffes. Diese hat üblicherweise zwei an gegenüberliegenden Längsseiten angeordnete Antriebsbänder (vgl. DE 195 47 860). Am unteren Ende des Füllrohres befindet sich eine Querschweißeinrichtung zum Bilden einer oberen und unteren Querschweißnaht an dem durch die Längsschweißeinrichtung gebildeten Schlauch.

Es gibt kontinuierlich arbeitende Schlauchbeutelmaschinen und diskontinuierlich arbeitende Schlauchbeutelmaschinen. Bei diskontinuierlich arbeitenden vertikalen Schlauchbeutelmaschinen ist die Querschweißeinrichtung ortsfest angeordnet. Der zugeführte Hüllstoff wird zyklisch zugeführt und in Bewegungspausen des Hüllstoffs wird die Querschweißnaht gebildet. Bei kontinuierlich arbeitenden vertikalen Schlauchbeutelmaschinen wird die Querschweißeinrichtung zunächst an den sich kontinuierlich bewegenden Schlauch des Hüllstoffs angelegt und zusammen mit diesem nach unten bewegt. Während gegenüberliegende Schweißbacken der Querschweißeinrichtung den Schlauch klemmen und die gegenüberliegenden Seiten des Schlauches verschweißen, wird durch das Füllrohr Schüttgut in den nun unterseits verschlossenen Schlauch eingefüllt. Nachdem die untere Querschweißnaht fertiggestellt ist, öffnet die Schweißbacke, verfährt nach oben und bildet die obere Schweißnaht des nun gefüllten Schlauchbeutels und gleichzeitig die untere Schweißnaht des nächsten Schlauchbeutels aus. Eine innerhalb der Schweißbacken angeordnete Trenneinrichtung, beispielsweise ein Messer, trennt den gefüllten Schlauchbeutel von dem nur unterseits geschlossenen Schlauch.

Die US-4,288,965, die eine gattungsgemäße Schlauchbeutelmaschine offenbart, behandelt das Problem, wie der Hüllstoff schonend von einer Vorratsrolle über das Zuführsystem zugeführt und mit Hilfe der Antriebseinrichtung vorgeschoben werden kann, ohne dass der Hüllstoff reißt. Dabei wird das Hauptaugenmerk bei der US-4,288,965 auf eine zeitlich abgestimmte Aktivierung der Antriebsmittel des Zuführsystems einerseits und der Antriebseinrichtung andererseits bei einer diskontinuierlichen Arbeitsweise der Schlauchbeutelmaschine gerichtet. Insbesondere bei hohen Arbeitstakten stellt sich das Problem einer angemessenen Abzugskraft für den zu verarbeitenden Hüllstoff unter Berücksichtigung verschiedener stofflicher Beschaffenheiten und Dicken, die sich auf das Reibverhalten und insbesondere bei vertikalen Schlauchbeutelmaschinen aufgrund des Eigengewichts des zu verarbeitenden Hüllstoffs auf das Abzugs- bzw. Förderverhalten der Hüllstoffe auswirkt.

Die Abzugseinrichtung ist dabei nicht nur mit einer Unterdruckquelle für die Saugkraft der Antriebsbänder angeschlossen. Vielmehr wird die Anpresskraft der Abzugseinrichtung, d.h. die Druckkraft der Antriebsbänder gegen das Füllrohr unter Zwischenlage des Hüllstoffs üblicherweise durch pneumatische Zylinder gestellt. Pneumatische Zylinder können auch zum Einstellen der Vorspanneinrichtung vorgesehen sein. Ferner kann die Längsschweißeinrichtung mit Druckluft betrieben werden, um den Hüllstoff möglichst berührungsfrei zu erwärmen und die übereinanderliegenden Lagen des Hüllstoffes zu einem Schlauch zu verschweißen.

Der vorliegenden Erfindung liegt das Problem zugrunde, eine Schlauchbeutelmaschine anzugeben, die bestmöglich an wechselnde, zu verarbeitende Hüllstoffe angepasst werden kann.

Die US 4,578,931 offenbart eine Schlauchbeutelmaschine, die eine Unterdruckquelle und Abzugsbänder umfasst. Die Abzugsbänder sind and der Unterdruckquelle unter Zwischenschaltung eines Ventils angeordnet.

Die EP-A-974 519 offenbart eine Längsschweißeinrichtung, die an eine Druckluftquelle unter Zwischenschaltung eines Ventils angeordnet ist.

Eine in der EP-A-974 519 offenbarte Abzugseinrichtung wird durch eine Antriebseinheit gesteuert.

Zur Lösung des Problems wird mit der vorliegenden Erfindung eine Schlauchbeutelmaschine mit den Merkmalen von Anspruch 1 angegeben. Bei der erfindungsgemäßen Schlauchbeutelmaschine erfolgt der Anschluss an die Unterdruckquelle und die Druckluftquelle unter Zwischenschaltung wenigstens eines elektrisch steuerbaren Ventils. In Abkehr von dem gattungsbildenden Stand der Technik, bei dem der wirksame pneumatische Druck jedenfalls durch manuell steuerbare Magnetventile eingestellt wird, kann mit der vorliegenden Erfindung das Druckniveau unterschiedlicher pneumatisch betriebener oder wirkender Teile der erfindungsgemäßen Schlauchbeutelmaschine durch Ansteuern des oder der elektrisch steuerbaren Ventile erfolgen.

Das Ventil der erfindungsgemäßen Schlauchbeutelmaschine ist ein elektrisch stellbares Ventil, welches automatisch, d.h. aufgrund von vorbestimmten elektrischen Signalen gestellt wird. Dementsprechend kann das Ventil exakt gesteuert und hierdurch der das wirkende Druckniveau eingestellt werden. Die erfindungsgemäße Schlauchbeutelmaschine weist ferner eine Steuereinrichtung mit Eingabeeinrichtung zum Eingeben eines zu steuernden Drucks auf. Der Benutzer der Maschine kann über Erfahrungswerte für eine bestmögliche Druckdifferenz an den Ansauglöchern, abhängig von dem jeweiligen Material des zu verarbeitenden Hüllstoffs verfügen und diese über die Eingabeeinrichtung eingeben. Hierdurch wird der Aufwand zum Einstellen der Schlauchbeutelmaschine bei einer sich ändernden Qualität des Hüllstoffes vermindert. Es ist danach möglich, die Schlauchbeutelmaschine rasch und effektiv auf das jeweilige, zu verarbeitende Material des Hüllstoffs einzustellen. Langwierige Versuche zum experimentellen Bestimmen des Betriebspunktes sind nicht erforderlich. Im übrigen können auch während des Betriebs und bei gleichbleibender Qualität des zu verarbeitenden Hüllstoffs Parameter, wie beispielsweise die Außentemperatur und die Luftfeuchtigkeit über die Eingabeeinrichtung eingegeben werden, durch welche über hinterlegte Korrekturfaktoren den Unterdruck an den Ansauglöchern anpasst werden, um den sich mit diesen Parametern ändernden Haftungsbedingungen zwischen dem Antriebsband und dem Hüllstoff Rechnung zu tragen.

Vorzugsweise hat die Schlauchbeutelmaschine dementsprechend im Hinblick auf ein einfaches und zuverlässiges Einrichten der Maschine einen Speicher, der als Bestandteil der Steuereinrichtung vorgesehen ist und in dem Voreinstellungen des wenigstens einen Ventils hinterlegt sind. Diese Voreinstellungen sind über die Eingabeeinrichtung auswählbar. Dem Fachmann sind verschiedene Möglichkeiten geläufig, wie er diese Auswählbarkeit anhand der Eingabeeinrichtung verwirklichen kann. Vorzugsweise wird er einen Touch-Screen verwenden.

Jede der Voreinstellungen hat regelmäßig für jedes der elektrisch stellbaren Ventile einen vorgegebenen Soll-Wert. Von dem Benutzer der Maschine können Voreinstellungen konfiguriert werden. Maßgebliche Parameter zur Bestimmung der Voreinstellung sind insbesondere das Format des Schlauchbeutels sowie die stoffliche Beschaffenheit. Das Format weist insbesondere Parameter zur Bestimmung der Größe des Beutels (Beutelinhalt) und des Gewichts des mit dem zu verpackenden Gut gefüllten Schlauchbeutels auf. Darüber hinaus sind in dem Speicher, in dem die Voreinstellungen hinterlegt sind, vorzugsweise zu jeder Voreinstellung werkstoffspezifische Parameter zu dem Material des Hüllstoffs hinterlegt. Dementsprechend kann der Benutzer bei sich ändernder stofflicher Beschaffenheit des Hüllstoffes unmittelbar den zutreffenden Betriebspunkt für das oder die Ventile aus den hinterlegten Voreinstellungen auswählen. Eine entsprechend vereinfachte Bedienung ergibt sich auch beispielsweise bei einer Änderung des Formates, sofern das gewünschte Format oder zumindest ein diesem sehr stark ähnelndes Format als Voreinstellung hinterlegt ist.

Eine zuverlässige Ansteuerung des gewünschten Sollwertes an den Ansauglöchern wird insbesondere dadurch erreicht, dass als elektrisch stellbares Ventil ein Proportionalventil eingesetzt wird.

Weitere bevorzugte Ausgestaltungen der vorliegenden Erfindung sind in den abhängigen Ansprüchen angegeben.

Weitere Einzelheiten, Vorteile und Merkmale der vorliegenden Erfindung ergeben sich aus der nachfolgenden Beschreibung eines Ausführungsbeispiels in Verbindung mit der

Zeichnung. In dieser zeigen:
- Fig. 1: eine perspektivische Ansicht eines Ausführungsbeispiels einer erfindungsgemäßen Verpackungsmaschine und;
- Fig. 2: die Längsschweißeinrichtung und die Abzugseinrichtung des in Fig. 1 gezeigten Ausführungsbeispiels; und
- Figur 3: die Zuführeinrichtung des in den Figuren 1 und 2 dargestellten Ausführungsbeispiels.

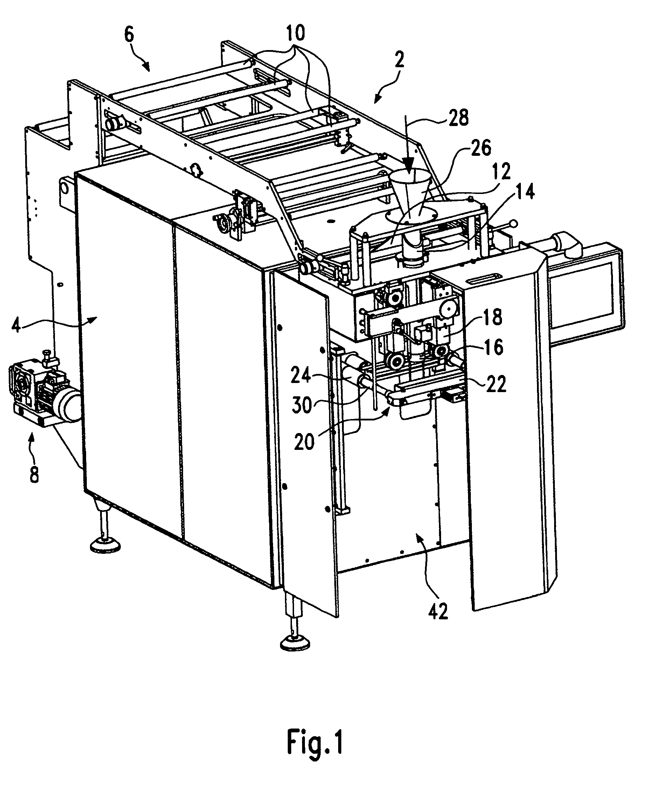

In Fig. 1 ist eine perspektivische Ansicht eines Ausführungsbeispiels einer erfindungsgemäßen Verpackungsmaschine mit einem im wesentlichen U-förmigen Maschinengestell 2 und einem innerhalb dieses Maschinengestells 2 aufgenommenen Schalt- und Antriebsschrank 4 gezeigt. Das Maschinengestell 2 bildet in seinem hinteren Teil eine nicht näher zu erkennende Zuführeinrichtung 6 für einen Hüllstoff aus. Die Zuführeinrichtung 6 umfasst eine verdrehfest in eine Rolle des Hüllstoffs einbringbare Welle, die mit einem seitlich zu erkennenden Zuführmotor 8 angetrieben wird. Der Hüllstoff wird über verschiedene Umlenkrollen 10 oberhalb des Schalt- und Antriebsschrankes 4 geführt, bis zu einem Kragen 12, über den die eben Bahn des Hüllstoffes zu einem sich in vertikaler Richtung bewegenden Schlauch umgelenkt wird. Hinter dem Kragen 12 wird der Schlauch um ein Füllrohr 14 mit rechteckigem Querschnitt geführt. An gegenüberliegenden Längsseiten des Füllrohres 14 befinden sich angetriebene Abzugsbänder 16, welche Teil einer Abzugs- bzw. Fördereinrichtung für den Schlauch sind. An der vorderen, sich rechtwinklig hierzu erstreckenden Stirnseite des rechteckigen Füllrohres 14 befindet sich eine Längsschweißeinrichtung 18, welche die übereinander gelegten Ränder der Hüllstoffbahn zur Ausbildung eines umfänglich geschlossenen Schlauches verschweißt. Darunter ist eine Querschweißeinrichtung 20 mit einer vorderen Schweißbacke 22 und einer hinteren Schweißbacke 24 zu erkennen.

In Verlängerung des Füllrohres 14 und über dem Kragen 12 befindet sich ein Trichter 26, durch welchen von einer nicht dargestellten Wiege- und Dosiereinrichtung abgeworfenes Schüttgut intermittierend in das Füllrohr 24 abgeworfen werden kann. Die vertikale Bewegungsbahn des abgeworfenen Schüttgutes ist mit Pfeil 28 gekennzeichnet.

Die jeweiligen Schweißbacken 22, 24 sind endseitig jeweils mit Stempeln 30, 32 verbunden, von denen lediglich die der vorderen Schweißbacke 22 zugeordneten Stempel in Fig. 1 zu erkennen sind. Die hintere Schweißbacke 24 ist kürzer als die vordere Schweißbacke 22 und liegt dementsprechend zwischen den Stempeln 30.

Die in Fig. 1 gezeigte Vorrichtung ermöglicht das Abpacken von Schüttgütern in Schlauchbeuteln. Hierzu wird Hüllstoff kontinuierlich über den Kragen 12 zu einem Schlauch geformt. Unterhalb des Füllrohres 14 wird der Schlauch durch Aufeinanderzubewegen der beiden Schweißbacken 22, 24 geklemmt und verschweißt. Während die Schweißbacken 22, 24 wirksam sind, wird über den Trichter 26 eine vorbestimmte Menge an Schüttgut abgeworfen. Dieser füllt den nun endseitig geschlossenen Schlauch. Währenddessen wandert der Schlauch mit seiner unteren Schweißnaht kontinuierlich in vertikaler Richtung nach unten. Sobald die Schweißnaht die notwendige Festigkeit erreicht hat, wird die Querschweißeinrichtung 20 geöffnet. Die Querschweißeinrichtung 20 wird entgegen der Bewegungsrichtung des Schlauches nach oben gefahren und oberhalb des Schüttgutes an den Schlauch angelegt. Die obere Schweißnaht des Beutels wird ausgebildet und hierdurch der Beutel verschlossen; zeitgleich wird hierbei die untere Schweißnaht des nächsten Beutels ausgebildet. Eine in Bewegungsrichtung des Schlauches in etwa mittig an einer der Schweißbacken 22 vorgesehenen Trenneinrichtung, beispielsweise ein Messer, wird nun betätigt, um den geschlossenen Schlauchbeutel von dem bereits unterseitig geschlossenen Schlauch zu trennen.

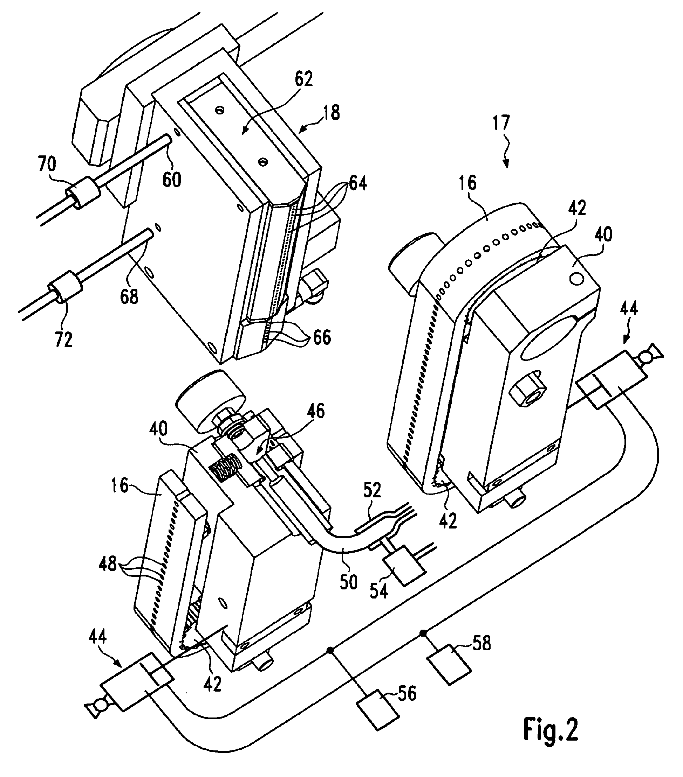

In Figur 2 sind die Längsschweißeinrichtung 18 sowie die Abzugseinrichtung 17 in vergrößerter Darstellung, jedoch ohne dazwischen angeordnetes Füllrohr gezeigt. Die Abzugseinrichtung umfasst zwei identisch ausgebildete Bandgehäuse 40, welche jeweils eines der Abzugsbänder 16 umlaufend drehbar lagern. Hierzu sind an gegenüberliegenden Enden des Bandgehäuses 14 gezahnte Räder 42 vorgesehen, die von den Abzugsbändern 16 umspannt sind. Eines der Räder 42 ist angetrieben. Die Bandgehäuse 40 sind über nicht dargestellte Führungen in einer Richtung auf das Füllrohr 14 zu beweglich gelagert. Zur Stellung dieser Bewegung weisen die Bandgehäuse 40 jeweils einen Stellzylinder 44 auf, der als doppelt wirkender pneumatischer Zylinder gebildet ist.

Die Bandgehäuse 40 bilden ferner eine Unterdruckkammer 46 aus, welche mit Ansauglöchern 48 kommuniziert, die sich an dem Füllrohr 14 anliegenden Abschnitt der Abzugsbänder 16 befinden.

An die Unterdruckkammer 46 ist ein Unterdruckkanal 50 angeschlossen, der in einen Ejektor 52. Hierbei handelt es sich um ein Ausführungsbeispiel einer mit Druckluft betriebenen Unterdruckquelle, die nach dem Venturi-System arbeitet und bei der die Mündung des Unterdruckkanals 50 von einer umgebenden Druckluftströmung umhüllt wird. Durch diesen Effekt wird die Unterdruckkammer 46 evakuiert. Druckluftseitig dem Ejektor 52 vorgelagert, befindet sich ein Proportionalventil 54. Durch Stellung dieses Proportionalventils 54 kann der Überdruck in dem Ejektor 52 und damit der in der Unterdruckkammer 46 einzustellende Unterdruck verändert werden.

Die doppelt wirkenden Pneumatikzylinder 54 sind mit ihren korrespondierenden Druckluftanschlüssen jeweils miteinander verbunden und hinter der Verbindungsstelle ebenfalls mit Proportionalventilen 56, 58 versehen.

Die Längsschweißeinrichtung 18 hat einen ersten Lufteinlass 60, der zu einer in der Längsschweißeinrichtung 18 ausgebildeten Heizkammer 62 führt, an der sich stromabwärts der Druckluft eine Vielzahl von in Längsrichtung hintereinander angeordneten Heißluftauslässen 64 anschließen. Unterhalb dieser Heißluftauslässe 64 befinden sich ebenfalls in Reihe hintereinander angeordnete Kaltluftauslässe, die über einen an der Längsschweißeinrichtung 18 ausgebildeten zweiten Lufteinlass 68 gespeist werden. Stromaufwärts der Lufteinlässe 60, 68 befinden sich jeweils Proportionalventile 70, 72. Sämtliche Proportionalventile 54, 56, 58, 70, 72 sind über ihre Steuerleitungen an eine nicht gezeigte Steuereinrichtung und pneumatisch an eine gemeinsame Druckquelle angeschlossen.

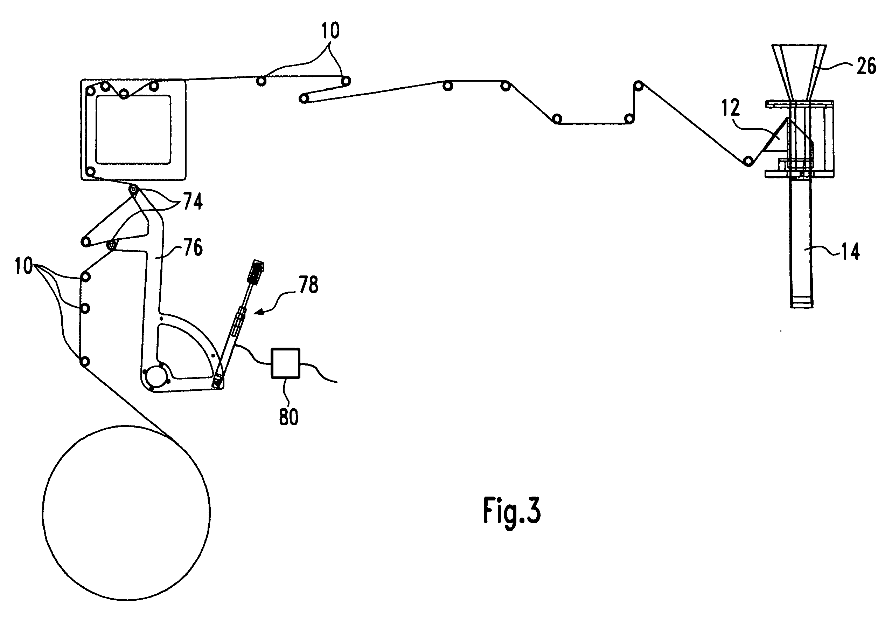

In Figur 3 sind einige Teile der Zuführeinrichtung 6 zu erkennen. Zwei den bahnförmigen Hüllstoff umlenkende Umlenkwalzen 74 sind einem Schwenkarm 76 angeordnet, dessen Stellung über einen Pneumatikzylinder 78 einstellbar ist. Die Versorgung des pneumatischen Zylinders 78 mit Druckluft erfolgt über ein weiteres Proportionalventil 80, welches ebenfalls mit von der Steuereinrichtung gesteuert bzw. geregelt wird und pneumatisch mit der einen gemeinsamen Druckquelle verbunden ist.

Beim Betrieb der Schlauchbeutelmaschine können abhängig von dem verarbeiteten Material und der Größe der zu bildenden Schlauchbeutel sowie abhängig von dem Gewicht des zu verpackenden Materials unterschiedliche Betriebsparameter eingestellt werden. Dabei beeinflusst die stoffliche Beschaffenheit zunächst insbesondere die Schweißbedingungen und damit auch die Menge der durch die Längsschweißeinrichtung 18 hindurchgeförderte Luft, und zwar sowohl der erhitzten und als Heißluft abströmenden Luft zum Anschmelzen des Hüllstoffs, als auch der Kaltluft zum Abkühlen der so hergestellten Schweißnaht, die im Hinblick auf die Befüllung des Schlauches mit zu verpackendem Schüttgut unmittelbar nach Erstellen der Schweißnaht eine hinreichende Festigkeit haben muss.

Zur Übertragung einer durch die Antriebsgeschwindigkeit der Räder 42 vorgegebenen Abzugsgeschwindigkeit auf den Hüllstoff, muss der Anpressdruck der Abzugsbänder 16 gegen den Hüllstoff durch die Zylinder 44 angemessen eingestellt werden. Auch hat eine an das entsprechende Material und das Format angepasst Einstellung des Unterdrucks zu erfolgen, welcher durch die Ansauglöcher 48 auf den Hüllstoff wirkt. Diese Betriebsparameter werden durch Auswahl einer Voreinstellung zu einem bestimmten Format und einem bestimmten Hüllstoffmaterial ausgewählt, damit ist der Betriebspunkt der Schlauchbeutelmaschine festgelegt. Manuelles Anpassen beim Betrieb der Schlauchbeutelmaschine zur Optimierung der Betriebsparameter ist nicht erforderlich. Die Eingabeeinrichtung kann ferner Möglichkeiten zur Eingabe weiterer, die Verarbeitbarkeit des Hüllstoffs beeinflussender Parameter aufweisen, so beispielsweise der Umgebungstemperatur und der Luftfeuchtigkeit.

### Bezugszeichenliste

- 2: Maschinengestell
- 4: Schalt- und Antriebsschrank
- 6: Zuführeinrichtung
- 8: Zuführmotor
- 10: Umlenkrollen
- 12: Kragen
- 14: Füllrohr
- 16: Abzugsbänder
- 17: Abzugseinrichtung
- 18: Längsschweißeinrichtung
- 20: Querschweißeinrichtung
- 22: vordere Schweißbacke
- 24: hintere Schweißbacke
- 26: Trichter
- 28: Pfeil (Bewegungsbahn)
- 30: Zugstange
- 32: Druckstange
- 40: Bandgehäuse
- 42: Räder
- 44: Zylinder
- 46: Unterdruckkammer
- 48: Ansauglöcher
- 50: Unterdruckkanal
- 52: Ejektor
- 54: Proportionalventil
- 56: Proportionalventil
- 58: Proportionalventil
- 60: erster Lufteinlass
- 62: Heizkammer
- 64: Heißluftauslässe
- 66: Kaltluftauslässe
- 68: zweiter Lufteinlass
- 70: Proportionalventil
- 72: Proportionalventil
- 74: Umlenkwalze
- 76: Schwenkarm
- 78: pneumatischer Zylinder
- 80: Proportionalventil

## Patentansprüche

1. Schlauchbeutelmaschine mit einem Zuführsystem (6) für einen einen Schlauch bildenden Hüllstoff, einem das zu verpackende Gut führenden Füllrohr (14), um welches der Hüllstoff geführt ist und dem eine Abzugseinrichtung (17) mit wenigstens einem den Hüllstoff fördernden umlaufenden angetriebenen Abzugsband (16), in dem mit einer Unterdruckquelle (52) verbundene Ansauglöcher (48) zum Ansaugen des Hüllstoffs ausgespart sind, und eine Längsschweißeinrichtung (18) zum Ausbilden eines Schlauches aus dem Hüllstoff zugeordnet ist, und einer gegenüberliegende Schweißbacken (22, 24) aufweisenden Querschweißeinrichtung (20) zum Bilden einer oberen und unteren Querschweißnaht eines Schlauchbeutels, und einer Steuereinrichtung mit Eingabeeinrichtung,
**dadurch gekennzeichnet,**
**dass** das Zuführsystem (6) und die Längsschweißeinrichtung (18) und die Abzugseinrichtung (17) an eine Druckluftquelle angeschlossen sind,
**dass** der Anschluss der Druckluftquelle und der Unterdruckquelle unter Zwischenschaltung wenigstens eines elektrisch stellbaren Ventils (54, 56, 58, 70, 72, 80) erfolgt und die Steuereinrichtung mit Eingabeeinrichtung zum Eingeben eines von dem Ventil (54, 56, 58, 70, 72, 80) zu steuernden Druckes vorgesehen ist.

2. Schlauchbeutelmaschine nach Anspruch 1, **durch gekennzeichnet**, dass die Steuereinrichtung einen Speicher umfasst, in dem Voreinstellungen des Ventils (54, 56, 58, 70, 72, 80) hinterlegt sind und dass die Voreinstellungen über die Eingabeeinrichtung auswählbar sind.

3. Schlauchbeutelmaschine nach Anspruch 2, **durch gekennzeichnet**, dass zu den Voreinstellungen Werkstoffklassifikationen zu dem Material des Hüllstoffs hinterlegt sind.

4. Schlauchbeutelmaschine nach Anspruch 2 oder 3, **dadurch gekennzeichnet, dass** das zu den Voreinstellungen Formate der zu bildenden Schlauchbeutel hinterlegt sind.

5. Schlauchbeutelmaschine nach einem der vorherigen Ansprüche, **dadurch gekennzeichnet, dass** das elektrisch stellbare Ventil ein Proportionalventil (54, 56, 58, 70, 72, 80) ist.

6. Schlauchbeutelmaschine nach einem der vorherigen Ansprüche, **dadurch gekennzeichnet, dass** die Abzugseinrichtung (17) um jeweils ein Bandgehäuse (40) umlaufende und an gegenüberliegenden Längsseiten des Füllrohres (40) angeordnete Abzugsbänder (16) umfasst, wobei die Bandgehäuse (40) zur Einstellung des Anpressdrucks über wenigstens einen pneumatischen Zylinder (44) auf das Füllrohr (14) stellbar sind und dass die pneumatischen Zylinder (44) über wenigstens ein elektrisch stellbares Ventil (56, 58) an der Druckluftquelle angeschlossen sind.

7. Schlauchbeutelmaschine nach Anspruch 6, **dadurch gekennzeichnet, dass** korrespondierende Kammern der Zylinder (44) der beiden Bandgehäuse (40) über ein gemeinsames elektrisch stellbares Ventil (56, 58) angeschlossen sind.

8. Schlauchbeutelmaschine nach einem der vorherigen Ansprüche, **dadurch gekennzeichnet, dass** wenigstens eine mit Druckluft betriebene Unterdruckquelle (52) vorgesehen ist, durch die eine in dem Bandgehäuse (40) ausgesparte Unterdruckkammer (46) evakuiert wird, und dass der Unterdruckquelle (52) ein elektrisch stellbares Ventil (54) zugeordnet ist.

9. Schlauchbeutelmaschine nach einem der vorherigen Ansprüche, **dadurch gekennzeichnet, dass** die Längsschweißeinrichtung (18) einen zu einer Heizkammer (62) und zu einem an der Längsschweißeinrichtung (18) ausgeformten, erwärmte Luft auf den Hüllstoff ausblasenden Heißluftauslass führenden ersten Lufteinlass (60) und einen zu einem Kaltluft auf den Hüllstoff ausblasenden und in Förderrichtung des Hüllstoffs hinter dem Heißluftauslass (64) vorgesehenen Kaltluftauslass (66) fürhrenden zweiten Lufteinlass (68) aufweist, und dass der erste und der zweite Lufteinlass (60, 68) jeweils über ein elektrisch stellbares Ventil (70, 72) an der Druckluftquelle angeschlossen sind.

10. Schlauchbeutelmaschine nach einem der vorherigen Ansprüche, **dadurch gekennzeichnet, dass** das Abzugssystem eine pneumatisch gestellte Vorspanneinrichtung umfasst, durch welche die zu dem Füllrohr führenden Bahn des Hüllstoffs unter Spannung gehalten wird, und dass die Vorspanneinrichtung durch ein elektrisch stellbares Ventil (70, 72) gestellt wird.

11. Schlauchbeutelmaschine nach einem der vorherigen Ansprüche, **dadurch gekennzeichnet, dass** sämtliche elektrisch stellbaren Ventile (54, 56, 58, 70, 72, 80) mit einer gemeinsamen Druckluftquelle verbunden sind.

## Claims

1. Tubular bag machine with a feed system (6) for wrapping material forming a tube, a filling pipe (14) which carries the material to be packed and around which the wrapping material is guided, and with which a drawing-off device (17) with at least one surrounding driven drawing-off belt (16) which conveys the wrapping material, and in which suction holes (48) connected to a vacuum source (52) to suck the wrapping material are sunk, and a longitudinal welding device (18) to form a tube from the wrapping material, are associated, and a transverse welding device (20) which has opposing welding cheeks (22, 24) to form an upper and a lower transverse weld seam of a tubular bag, and a controller with an input device,
**characterized in that**
the feed system (6) and the longitudinal welding device (18) and the drawing-off device (17) are connected to one compressed air source, that the connection of the compressed air source and vacuum source is done with at least one electrically adjustable valve (54, 56, 58, 70, 72, 80) connected intermediately, and that the controller with input device is provided for entering a pressure to be controlled by the valve (54, 56, 58, 70, 72, 80).

2. Tubular bag machine according to Claim 1, **characterized in that** the controller includes a memory, in which presettings of the valve (54, 56, 58, 70, 72, 80) are stored, and that the presettings can be selected via the input device.

3. Tubular bag machine according to Claim 2, **characterized in that** for the presettings, material classifications of the material of the wrapping material are stored.

4. Tubular bag machine according to Claim 2 or 3, **characterized in that** for the presettings, formats of the tubular bags to be formed are stored.

5. Tubular bag machine according to one of the preceding claims, **characterized in that** the electrically adjustable valve is a proportional valve (54, 56, 58, 70, 72, 80).

6. Tubular bag machine according to one of the preceding claims, **characterized in that** the drawing-off device (17) includes drawing-off belts (16) which each run around a belt housing (40) and are arranged on opposite longitudinal sides of the filling pipe (40), the belt housings (40) being adjustable to adjust the contact pressure via at least one pneumatic cylinder (44) onto the filling pipe (14), and that the pneumatic cylinders (44) are connected via at least one electrically adjustable valve (56, 58) on the compressed air source.

7. Tubular bag machine according to Claim 6, **characterized in that** corresponding chambers of the cylinders (44) of the two belt housings (40) are connected via a common electrically adjustable valve (56, 58).

8. Tubular bag machine according to one of the preceding claims, **characterized in that** at least one vacuum source (52) operated by compressed air is provided, through it a vacuum chamber (46) sunk in the belt housing (40) is evacuated, and that an electrically adjustable valve (54) is associated with the vacuum source (52).

9. Tubular bag machine according to one of the preceding claims, **characterized in that** the longitudinal welding device (18) has a first air inlet (60) leading to a heating chamber (62) and to a hot air outlet which is formed on the longitudinal welding device (18) and blows heated air onto the wrapping material, and a second air inlet (68) leading to a cold air outlet (66) which blows cold air onto the wrapping material and is provided behind the hot air outlet (64) in the conveying direction of the wrapping material, and that the first and second air inlets (60, 68) are each connected to the compressed air source via an electrically adjustable valve (70, 72).

10. Tubular bag machine according to one of the preceding claims, **characterized in that** the drawing-off system includes a pneumatically adjusted pretensioning device, by which the strip of the wrapping material forming a tube leading to the filling pipe is kept under tension, and that the pretensioning device is adjusted by an electrically adjustable valve (70, 72).

11. Tubular bag machine according to one of the preceding claims, **characterized in that** all electrically adjustable valves (54, 56, 58, 70, 72, 80) are connected to a common compressed air source.

## Revendications

1. Machine pour sachets tubulaires comprenant un système d'amenée (6) pour une matière d'emballage formant un tube ; un tuyau de remplissage (14) qui guide le produit à emballer, autour duquel est amenée la matière d'emballage et auquel sont associés un dispositif de dévidage (17) comportant au moins une bande de dévidage sans fin entraînée (16) qui achemine la matière d'emballage et dans laquelle sont réalisés des perçages d'aspiration (48) reliés à une source de dépression (52) pour aspirer la matière d'emballage, et un dispositif de soudage longitudinal (18) pour former un tube à partir de la matière d'emballage ; un dispositif de soudage transversal (20) qui comporte des mâchoires de soudage opposées (22, 24) pour former des soudures transversales supérieure et inférieure sur un sachet tubulaire ; et un dispositif de commande avec un dispositif d'entrée,
**caractérisé en ce que** le système d'amenée (6), le dispositif de soudage longitudinal (18) et le dispositif de dévidage (17) sont reliés à une source d'air comprimé, et **en ce que** le raccordement de la source d'air comprimé et de la source de dépression se fait à l'aide d'au moins une soupape à réglage électrique (54, 56, 58, 70, 72, 80), et le dispositif de commande pourvu d'un dispositif d'entrée est destiné à entrer une pression à commander à l'aide de la soupape (54, 56, 58, 70, 72, 80).

2. Machine pour sachets tubulaires selon la revendication 1, **caractérisée en ce que** le dispositif de commande comprend une mémoire dans laquelle sont stockés des réglages préalables de la soupape (54, 56, 58, 70, 72, 80), et **en ce que** les réglages préalables peuvent être sélectionnés par l'intermédiaire du dispositif d'entrée.

3. Machine pour sachets tubulaires selon la revendication 2, **caractérisée en ce que** pour les réglages préalables, des classifications de matériau sont mises en mémoire pour la matière d'emballage.

4. Machine pour sachets tubulaires selon la revendication 2 ou 3, **caractérisée en ce que** pour les réglages préalables, des formats des sachets tubulaires à former sont mis en mémoire.

5. Machine pour sachets tubulaires selon l'une des revendications précédentes, **caractérisée en ce que** la soupape à réglage électrique est constituée par une soupape proportionnelle (54, 56, 58, 70, 72, 80).

6. Machine pour sachets tubulaires selon l'une des revendications précédentes, **caractérisée en ce que** le dispositif de dévidage (17) comprend des bandes de dévidage (16) qui passent chacune sur un boîtier de bande (40) et qui sont disposées sur les côtés longitudinaux opposés du tuyau de remplissage (40), les boîtiers de bandes (40) étant réglables en vue du réglage de la pression de serrage sur le tube de remplissage (14) par l'intermédiaire d'au moins un cylindre pneumatique (44), et **en ce que** les cylindres pneumatiques (44) sont reliés à la source d'air comprimé par l'intermédiaire d'au moins une soupape à réglage électrique (56, 58).

7. Machine pour sachets tubulaires selon la revendication 6, **caractérisée en ce que** les chambres correspondantes des cylindres (44) des deux boîtiers de bandes (40) sont reliées par l'intermédiaire d'une soupape commune à réglage électrique (56, 58).

8. Machine pour sachets tubulaires selon l'une des revendications précédentes, **caractérisée en ce qu'**il est prévu au moins une source de dépression (52) fonctionnant avec de l'air comprimé, grâce à laquelle une chambre à dépression (46) formée dans le boîtier de bande (40) est évacuée, et **en ce qu'**une soupape à réglage électrique (54) est associée à la source de dépression (52).

9. Machine pour sachets tubulaires selon l'une des revendications précédentes, **caractérisée en ce que** le dispositif de soudage longitudinal (18) comporte une première admission d'air (60) menant à une chambre de chauffage (62) et à une sortie d'air chaud qui est formée sur le dispositif de soudage longitudinal (18) et qui éjecte vers la matière d'emballage de l'air chauffé, et une seconde admission d'air (68) menant à une sortie d'air froid (66) qui éjecte de l'air froid vers la matière d'emballage et qui est prévue derrière la sortie d'air chaud (64), dans le sens d'acheminement de la matière d'emballage, et **en ce que** les première et seconde admissions d'air (60, 68) sont reliées à la source d'air comprimé par l'intermédiaire de soupapes à réglage électrique respectives (70, 72).

10. Machine pour sachets tubulaires selon l'une des revendications précédentes, **caractérisée en ce que** le système de dévidage comprend un dispositif de tension préalable à réglage pneumatique qui maintient une tension sur la bande de matière d'emballage menant au tuyau de remplissage, et **en ce que** le dispositif de tension préalable est réglé grâce à une soupape à réglage électrique (70, 72).

11. Machine pour sachets tubulaires selon l'une des revendications précédentes, **caractérisée en ce que** toutes les soupapes à réglage électrique (54, 56, 58, 70, 72, 80) sont reliées à une source d'air comprimé commune.
